# EUROPÄISCHE PATENTSCHRIFT

(11) **EP 2 965 896 B1**
(45) Veröffentlichungstag und Bekanntmachung des Hinweises auf die Patenterteilung: **13.06.2018**
(21) Anmeldenummer: 15169523.6
(22) Anmeldetag: 28.05.2015
(51) Int. Cl.: B29D 30/46, B26D 1/22, B26D 1/24, B26D 7/20, B26D 3/00

(54) **SLITTER ZUM SCHNEIDEN EINES CORDBANDES**
SLITTER FOR CUTTING A CORD BELT
DÉCOUPEUR D'UNE BANDE DE CORDE

(30) Priorität: 08.07.2014 DE 102014109516
(43) Veröffentlichungstag der Anmeldung: 13.01.2016
(73) Patentinhaber: Karl Eugen Fischer GmbH, 96224 Burgkunstadt (DE)
(72) Erfinder: KLENNER, Ralf, 96272 Hochstadt (DE); BÄR, Manfred, 95336 Mainleus (DE)
(74) Vertreter: Lindner Blaumeier Patent- und Rechtsanwälte

(56) Entgegenhaltungen:
- DE-A1- 3 419 843
- DE-A1- 19 709 485
- DE-U1-202004 013 164
- DE-U1-202013 104 653
- DE-U1-202013 104 655
- JP-A- 2003 080 489
- US-A- 2 329 469

## Beschreibung

Die Erfindung betrifft einen Slitter zum Schneiden eines Cordbandes, mit einem Rahmengestell, wenigstens einer Schneideinheit, sowie einer Zuführeinrichtung, über die das der Schneideinheit zuzuführende Cordband geführt wird, wobei die Schneideinheit eine über ein Antriebsmittel angetriebene erste und eine zweite Messerwelle, die parallel zueinander angeordnet sind und die zum Schneiden zusammenwirken, umfasst, zwischen denen das zu schneidende Cordband durchläuft.

Ein solcher, beispielsweise aus DE 20 2013 104 653 U1 bekannter Slitter dient zum Schneiden eines gummierten Cordbandmaterials, das in der bahnverarbeitenden Industrie verwendet wird. Ein Slitter ist eine Längsteilvorrichtung, mit welcher die Cordbandbahn in Produktionsprozess bei Bedarf in mindestens zwei Materialstreifen getrennt wird. Dies dient der Erhöhung der Ausbringung der Verarbeitungsanlage. Das Cordbandmaterial wird über eine Zuführeinrichtung, die Teil des Slitters ist, definiert zugeführt. Diese Zuführeinrichtung ist häufig in Form eines sogenannten Steuerrahmens realisiert, umfassend mehrere parallel zueinander angeordnete, längs einer Bogenbahn positionierte Führungs- oder Transportrollen, auf denen das Cordband aufliegt und geführt wird. Dieser Steuerrahmen ist zumeist über eine vertikale Achse schwenkbar, so dass die Relativposition des Rahmens und damit auch des zugeführten Bandes zu der nachgeschalteten Schneideinheit veränderbar und damit etwaige Lageveränderungen des Cordbandes korrigierbar sind.

Der Zuführeinrichtung nachgeschaltet ist die eigentliche Schneideinheit, bestehend aus zwei Messerwellen, die um parallele Achsen rotieren, wobei eine Messerwelle angetrieben ist. Zwischen beiden läuft das Cordband ein und wird in wenigstens zwei Bandabschnitte längsgeteilt, die gleiche oder unterschiedliche Breiten aufweisen. Selbstverständlich können die Messwellen auch so ausgelegt sein, dass mehr als zwei Bandabschnitte erzeugt werden.

Bei bekannten Slittern läuft das zu schneidende Cordband, sei es Textilcord oder Stahlcord, von der Zuführeinrichtung vertikal nach unten direkt zwischen die beiden Messerwellen. An wenigstens einer Messerwelle sind Mitnehmerscheiben angeordnet, die das Cordband greifen und durch die Schneideinrichtung ziehen. Im Rahmen des Betriebs des Slitters kann es dabei mitunter zu einem leichten seitlichen Pendel des zugeführten Cordbandes längs der Förderstrecke von der Zuführeinrichtung zur Schneideinrichtung kommen, d. h., dass das Band leicht seitlich verläuft. Es ergibt sich also ein gewisser Verzug, was sich mitunter nachteilig auf die erzeugten Bandabschnitte auswirkt. Auch kann es aufgrund des Angreifens der Mitnehmerscheiben, üblicherweise Rändelscheiben, direkt am Bandmaterial zu einem Verdrücken des Materials kommen, was sich ebenfalls nachteilig auf das Material auswirken kann.

Ein weiterer Slitter zum Schneiden eines Cordbandes ist aus der Patentschrift US 2,329,469 bekannt. Das Dokument JP 2003 080489 A offenbart einen Slitter zum Schneiden eines Cordbandes mit den Merkmalen des Oberbegriffs von Anspruch 1.

Der Erfindung liegt damit das Problem zugrunde, einen Slitter anzugeben, der demgegenüber verbessert ist.

Zur Lösung dieses Problems ist daher ein Slitter mit den Merkmalen des unabhängigen Anspruchs 1 vorgesehen. Beim erfindungsgemäßen Slitter ist zwischen Zuführeinrichtung und Schneideinheit eine Umlenkrolle vorgeschaltet, auf die das von der Zuführeinrichtung kommende Cordband aufläuft und diese abschnittsweise umschlingt. Diese Umlenkrolle ist so positioniert, dass das von der Umlenkrolle zur ersten Messerwelle geführte Cordband so auf die Messerwelle aufläuft, dass es auch die Messerwelle abschnittsweise umschlingt. D. h., dass das Cordband sowohl auf der Umlenkrolle aufliegt und geführt ist, wie auch auf der vorzugsweise eine zylindrische Mantelfläche aufweisenden trommel- oder walzenförmigen Messerwelle. Aufgrund dieser Auflage respektive Führung insbesondere an der Umlenkrolle wird mit besonderem Vorteil erreicht, dass das Cordband sich beruhigt und aufgrund der Auflage respektive Umschlingung nicht freiliegt, sondern eine definierte Führung erfährt und seitlich nicht verrutschen kann. Entsprechendes gilt auch in Bezug auf die Messerwelle, die nach Art einer Trommel oder Walze ausgeführt werden kann, mithin also ebenfalls eine entsprechende Bandauflagefläche an der Außenseite aufweist, auf der das Cordband aufliegt und geführt wird, bevor es tatsächlich geschnitten wird.

Damit ist das sich bei bisher bekannten Slittern mitunter einstellende Pendeln des Bandes ausgeschlossen, wie auch die Möglichkeit besteht, das Cordband sicher und ohne Krafteinwirkung auf das Cordband an der Messerwelle selbst zu führen, so dass die eingangs genannten Probleme bei dem erfindungsgemäßen Slitter nicht mehr gegeben sind.

Die Umlenkrolle ist bevorzugt über ein entsprechendes Antriebsmittel angetrieben, wozu sich ein Servomotor mit nachgeschaltetem Getriebe, das bevorzugt direkt auf die Antriebswelle der Umlenkrolle wirkt, ausgeführt ist. Alternativ wäre gegebenenfalls auch ein Riementrieb denkbar. D. h., dass bevorzugt die Umlenkrolle also aktiv angetrieben wird, wobei natürlich die Rotationsgeschwindigkeit der Umlenkrolle der Fördergeschwindigkeit des Cordbandes und der entsprechenden Rotationsgeschwindigkeit der angetriebenen ersten Messerwelle in der Schneideinheit angepasst ist. Grundsätzlich wäre es natürlich auch möglich, die Umlenkrolle nicht anzutreiben, mithin also als fliegende Rolle laufen zu lassen.

Da bevorzugt sowohl die Umlenkrolle als auch die erste Messerwelle angetrieben werden, ist es denkbar, diese über ein gemeinsames Antriebsmittel anzutreiben, beispielsweise in Form eines umlaufenden Zahnriemens, der über einen entsprechenden Antriebsmotor, bevorzugt wiederum ein Servomotor, angetrieben wird. Alternativ dazu ist es selbstverständlich auch denkbar, die erste Messerwelle über einen separaten Antriebsmotor anzutreiben, wobei die Antriebe wie beschrieben synchronisiert sind.

Der Umschlingungswinkel des Cordbandes an der Umlenkrolle sollte wenigstens 75°, bevorzugt wenigstens 90° betragen. Über einen derart großen Umschlingungswinkel ist sichergestellt, dass das Cordband über eine hinreichende Länge an der Umlenkrolle geführt ist, so dass sie sich seitlich versetzen kann. Dabei sollte der Durchmesser der Umlenkrolle zwischen 200 - 400 mm, insbesondere zwischen 250 - 350 mm und vorzugsweise bei ca. 300 mm liegen. Es wird also eine vom Durchmesser her relativ groß bemessene Umlenkrolle respektive Trommel verwendet, so dass sich bei einem Umschlingungswinkel von wenigstens 75° eine hinreichende umfangsmäßige Auflagelänge ergibt.

Auch der Umschlingungswinkel des Cordbandes an der ersten Messerwelle sollte wenigstens 75°, insbesondere wenigstens 90° betragen. Auch in diesem Fall ist eine hinreichende Auflagefläche bei entsprechender Umschlingungswinkelbemessung realisiert. Vorzugsweise sind der Umschlingungswinkel an der Umlenkrolle und der Umschlingungswinkel an der Messerwelle, abgesehen von einer geringen Toleranz, gleich.

Dabei sollte der Durchmesser der ersten Messerwelle ebenfalls im Bereich zwischen 200 - 400 mm, insbesondere zwischen 250 - 300 mm vorzugsweise bei ca. 300 mm liegen. Bevorzugt ist der Durchmesser der ersten Messerwelle gleich dem der Umlenkrolle. D. h., dass auch als erste Messerwelle eine im Durchmesser hinreichend groß bemessene Trommel verwendet wird. Die zweite Messerwelle hat demgegenüber einen deutlich kleineren Durchmesser, dieser liegt bevorzugt zwischen 150 - 250 mm, insbesondere bei ca. 180 mm, bezogen auf das radial vorspringende Messer, das auf die eigentlich Lager- bzw. Antriebswelle, die einen Durchmesser von ca. 40 - 50 mm aufweist, aufgesetzt ist. Diese zweite Messerwelle muss das Cordband weder fördern noch führen, es dient einzig und allein dem eigentlichen Schnitt, nachdem es mit seinem Messer mit dem entsprechenden Gegenmesser an der ersten Messerwelle zusammenwirkt. Aus diesem Grund ist die zweite Messerwelle auch nicht angetrieben.

Gemäß einer zweckmäßigen Weiterbildung der Erfindung ist die Umlenkrolle linear oder schwenkbewegbar angeordnet, wobei diese Bewegung entweder manuell oder, bevorzugt, über ein Stellelement wie beispielsweise einen Stellzylinder oder Ähnliches möglich ist. Diese Verstellung ermöglicht es, die Umlenkrolle von einer Arbeitsposition, die sie während des Slitterbetrieb einnimmt, in eine Wartungsposition, in welcher entsprechende Arbeiten am Slitter möglich sind, zu bewegen.

Um die Umlenkrolle auf einfache Weise bewegen zu können ist sie bevorzugt an einem Träger drehgelagert, der über Linearführungen linear bewegbar am Rahmengestell angeordnet ist. Über diese Linearführungen ist eine einfache Verstellung der Umlenkrolle möglich, sei es manuell, sei es über ein Stellelement wie einen Stellzylinder, Gewindetrieb oder Ähnliches. Gemäß der Erfindung sind der Schneideinrichtung zwei in einer Richtung senkrecht zur Materialtransportrichtung versetzt angeordnete Führungsrollen nachgeschaltet, über die jeweils ein geschnittener Cordbandstreifen läuft. Über diese beiden Führungsrollen werden die geschnittenen Cordbandstreifen in einer Richtung senkrecht zur Materialtransportrichtung voneinander beabstandet, so dass sie separat weiter prozessiert werden können. Erfindungsgemäß sind dabei die Führungsrollen über ein Antriebsmittel angetrieben, d. h., dass auch die geschnittenen Cordbandstreifen aktiv transportiert werden. Bevorzugt ist dabei eine Kopplung zwischen dem Antrieb der Messerwelle und dem der Führungsrollen gegeben, d. h., dass die Führungsrollen und die erste Messerwelle über ein gemeinsames Antriebsmittel angetrieben sind. Hierzu eignet sich besonders gut ein umlaufender Riemen, beispielsweise ein Zahnriemen, der um eine Riemenscheibe der ersten Messerwelle sowie eine Riemenscheibe der jeweiligen Führungsrolle läuft, und der über einen entsprechenden Antriebsmotor, wiederum ein Servomotor, entsprechend angetrieben wird. Hierüber kann auch eine entsprechende Synchronisation der Rotationsgeschwindigkeiten erreicht werden.

Zu Einrichtungs- und Wartungszwecken ist es zweckmäßig, wenn die zweite Messerwelle zur Einstellung des Abstands relativ zur ersten Messerwelle bewegbar ist. Dies kann beispielsweise über einen Gewindespindelmechanismus, der manuell oder auch über einen entsprechenden Elektromotor betätigt werden kann, erfolgen. Über diese Verstellung kann der Schneidprozess auf einfache Weise deaktiviert werden, wenn eine Funktion ohne Slitter erforderlich ist.

Wie beschrieben dient auch die erste Messerwelle der Auflage und Führung des Cordbandes auf ihrer Mantelfläche, d. h., dass die Messerwelle selbst rollen- oder trommelartig ausgeführt ist. Gemäß einer konkreten Erfindungsausgestaltung kann hierzu die erste Messerwelle eine Achse umfassen, an der über Haltescheiben eine erste Hülse angeordnet ist, die in einem ersten Abschnitt einen ersten Durchmesser aufweist, der unter Ausbildung einer Anschlagkante auf einen kleineren zweiten Durchmesser abnimmt, wobei an der Anschlagkante ein ringförmiges Slittermesser anliegt, das über wenigstens eine auf die Hülse aufgeschobene weitere Hülse fixiert oder an einer solchen angeordnet ist, wobei der Durchmesser der weiteren Hülse dem ersten Durchmesser der ersten Hülse entspricht. Um die zylindrische Mantelfläche auszubilden kommen gemäß dieser Erfindungsausgestaltung also zwei Hülsen zum Einsatz, nämlich eine erste Hülse, die einen Abschnitt mit einem ersten Durchmesser aufweist, sowie eine weitere Hülse, die einen gleichen Außendurchmesser aufweist. Beide Hülse ergänzen sich, so dass sich insgesamt eine zylindrische Konfiguration ergibt. Zwischen beiden ist das eigentliche ringförmige Slittermesser gespannt, das mit der zweiten Messerwelle zusammenwirkt. Das Slittermesser ist dabei im Außendurchmesser ebenfalls so bemessen, dass es maximal den ersten Durchmesser aufweist, so dass sich folglich eine nahezu ununterbrochene zylindrische Mantelfläche ergibt, die lediglich einen leichten nutartigen Einstich im Bereich des Slittermessers aufweist, da dort das Schneidmesser der zweiten Messerwelle eingreifen muss. Eine solche Ausführung der ersten Messerwelle ist grundsätzlich auch bei Slittern zweckmäßig, bei denen keine Umlenkrolle, wie erfindungsgemäß oben beschrieben, vorgesehen ist. Denn es ist grundsätzlich auch möglich, durch entsprechende Positionierung der Schneideinrichtung relativ zur Zuführeinrichtung das Cordband so zur ersten, rollen- oder trommelartig ausgeführten Messerwelle zu führen, dass eine gewisse Umschlingung gegeben ist.

Weiterhin kann vorgesehen sein, dass die wenigstens eine Hülse mittels einer an einer Haltescheibe befestigten Klemmscheibe gehaltert ist. Über diese Klemmscheibe wird folglich die Hülsenkonfiguration nebst dem Slittermesser axial verspannt. Dabei ist es grundsätzlich denkbar, anstelle nur einer weiteren Hülse auch zwei einander axial nachgeschaltete weitere Hülsen mit gleichem Durchmesser vorzusehen.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Seitenansicht eines erfindungsgemäßen Slitters,
- Fig. 2: eine vergrößerte Detailansicht der Schneideinheit mit vorgeschalteter Umlenkrolle,
- Fig. 3: eine Seitenansicht der Schneideinheit aus Fig. 1 in detaillierterer Darstellung,
- Fig. 4: eine Vorderseitenansicht der Schneideinheit aus Fig. 3,
- Fig. 5: eine Aufsicht auf die Schneideinheit aus Fig. 4,
- Fig. 6: eine Perspektivansicht der Schneideinheit aus Fig. 5,
- Fig. 7: eine Perspektivansicht des erfindungsgemäßen Slitters,
- Fig. 8: eine Schnittansicht durch die erste Messerwelle,
- Fig. 9: eine Prinzipdarstellung einer Karkassenanlage mit einem erfindungsgemäßen Slitter zum Schneiden von Cordband, und
- Fig. 10: eine Prinzipdarstellung einer Gürtelanlage mit einem erfindungsgemäßen Slitter zum Schneiden von Cordband.

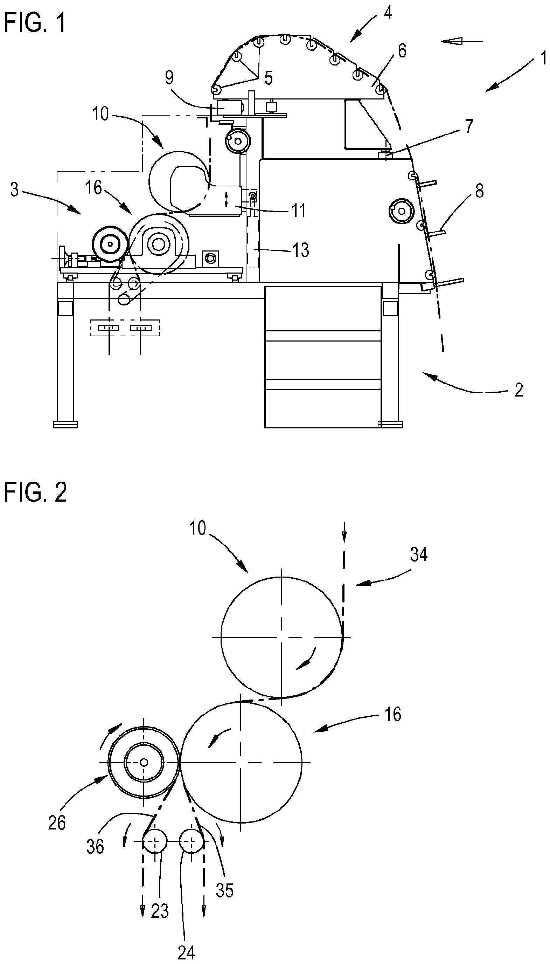

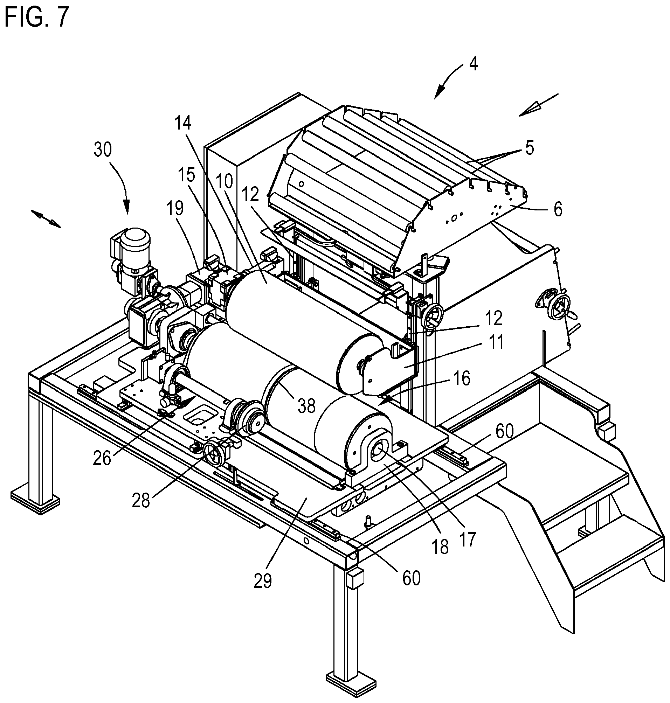

Fig. 1 zeigt einen erfindungsgemäßen Slitter 1, mit einem Rahmengestell 2, wenigstens einer Schneideinheit 3 sowie einer Zuführeinrichtung 4. Das zu schneidende Cordband wird über die Zuführeinrichtung 4 zugeführt. Diese verfügt hierzu über eine Reihe einzelner Trag- oder Führungsrollen 5, siehe hierzu auch Fig. 7, über die das Band läuft. Die Rollen 5 sind Teil eines Steuerrahmens 6, der um eine Vertikalachse 7 drehbar am Rahmengestell 2 angeordnet ist.

Das Cordband wird über eine Einlaufführung 8 umfassend mehrere abstehende Führungsfinger (alternativ können auch Führungsbleche vorgesehen sein) zugeführt und läuft auf den Steuerrahmen 6 respektive die Rollen 5 auf. Zur Schwenkverstellung um die Vertikalachse 7 dient ein Stellmotor 9. Durch entsprechende Verschwenkung des Steuerrahmens 6 wird die Relativposition des Cordbandes zur Schneideinheit 3 definiert.

Der Zuführeinrichtung 4 nachgeschaltet ist eine Umlenkrolle 10, die, siehe auch Fig. 7, an einem Träger 11 drehbar angeordnet ist. Der Träger 11 ist am Rahmengestell 2 über entsprechende *Linearführungen* 12 vertikal bewegbar angeordnet, wozu ein Stellelement 13, beispielsweise ein Stellzylinder oder ein Gewindetrieb, dient. Hierüber kann die Umlenkrolle relativ zur nachgeschalteten Schneideinheit bewegt und zwischen einer Arbeitsposition und einer Wartungsposition verstellt werden.

Wie Fig. 7 zu entnehmen ist, ist zum aktiven Antreiben der Umlenkrolle 10 ein Antriebsmittel 14 umfassend einen Antriebsmotor und ein nachgeschaltetes Getriebe 15 vorgesehen, das direkt auf die Achse der Umlenkrolle 10, über die diese am Träger 11 gelagert ist, wirkt. Das über die Zuführeinrichtung 4 zugeführte Cordband wird folglich aktiv von der Umlenkrolle 10 übernommen respektive gefördert.

Die Schneideinheit 3 umfasst eine erste Messerwelle 16, die - siehe Fig. 7 - als eine zylindrische Mantelfläche aufweisende Rolle oder Trommel ausgeführt ist. Sie ist mit ihrer Drehachse 17 an einem Lagerbauteil 18 angeordnet. Sie ist aktiv angetrieben, wozu ein Antriebsmotor 19 vorgesehen ist, der über ein Getriebe 20 wiederum direkt auf die Achse 17 wirkt. Auf dieser Achse 17 sitzt ein Riemenrad 21, um das ein Riemen 22 läuft, der seinerseits zu zwei der Schneideinheit 4 nachgeschalteten Führungsrollen 23, 24 läuft und diese umschlingt und über eine Umlenkrolle 25 wieder zurückläuft. Über die Führungsrollen 23, 24 werden die geschnittenen Bandabschnitte voneinander separiert. Diese Führungsrollen 23, 24 sind über diesen Antrieb aktiv angetrieben, d. h., dass das geschnittene Band aktiv von der Schneideinheit 4 abgefördert wird.

Die Schneideinheit 3 umfasst des Weiteren eine zweite Messerwelle 26, auf der ein Schneidmesser 28 sitzt. Dieses Schneidmesser 28 interagiert mit einem entsprechenden Schneidmesser 38. Die zweite Messerwelle 26 ihrerseits ist nicht angetrieben. Die Messerwellen 16, 26 sind auf einem gemeinsamen Träger 29 angeordnet. Dieser Träger 29 ist auf Linearführungen 60 am Rahmengestell in einer Richtung senkrecht zur Bandtransportrichtung bewegbar, so dass folglich die Positionierung der Schneidmesser 28, 38 relativ zum Band verstellbar ist. Für diese Querverstellung dient ein entsprechender Antriebsmotor 30.

Der Anpressdruck des Schneidmessers 28 gegen die erste Messerwelle 16 ist einstellbar. Hierzu wird die nicht angetriebene zweite Messerwelle 26 mittels eines Stellelements, insbesondere eines Pneumatikzylinders mit einstellbarer Kraft gegen die erste Messerwelle gedrückt.

Zur Veränderung des Abstands der beiden Messerwellen 16 und 26 zueinander ist die zweite Messerwelle 26 über einen Verstellmechanismus 31 relativ zur ersten Messerwelle 16 verstellbar. Hierzu ist die zweite Messerwelle 26 auf einem zweiten Träger 32, der auf Linearführungen 33 an dem Träger 29 angeordnet ist, aufgebaut bzw. gelagert. Über den Verstellmechanismus 31, hier ein einfacher Handkurbelmechanismus, kann folglich die zweite Messerwelle 26 relativ zur ersten Messerwelle 16 bewegt werden.

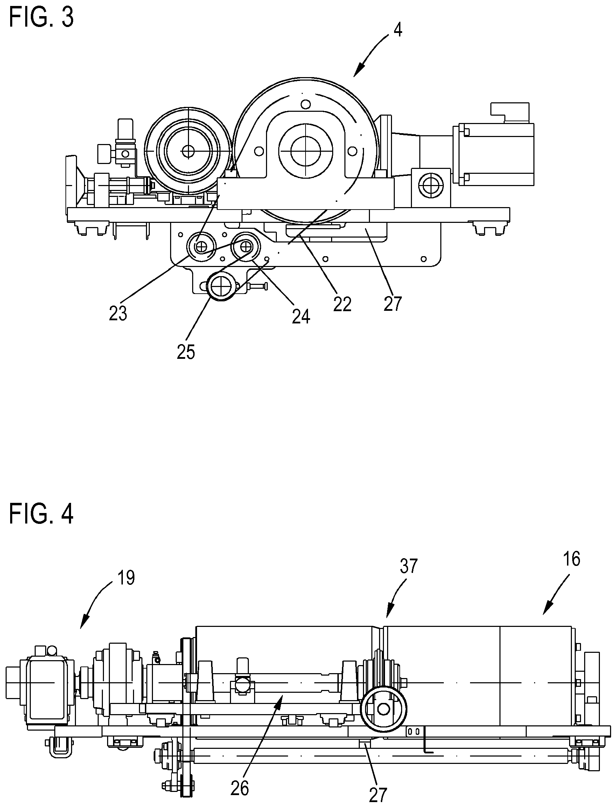

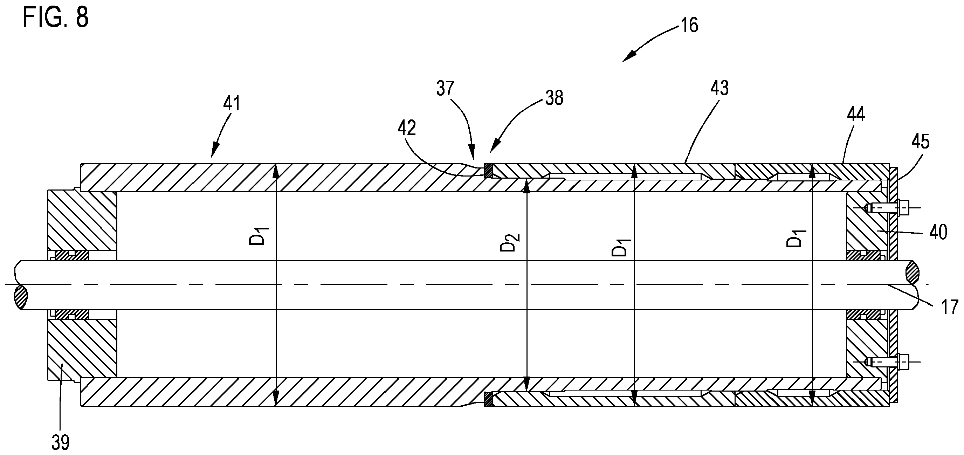

Ferner ist den Figuren 3 und 4 eine mittig angeordnete Ablageleiste 27 zu entnehmen. Auf dieser stützt sich die erste Messerwelle 16 ab, wenn ein Messerwechsel erforderlich ist. Hierzu kann die modular aufgebaute erste Messerwelle 16 entsprechend zerlegt werden, worauf nachfolgend in Bezug auf die Figur 8 noch näher eingegangen wird.

Ein zentrales Element des erfindungsgemäßen Slitters 1 ist die Umlenkrolle 10. Fig. 2 zeigt in Form einer Prinzipdarstellung die Führung des zu schneidenden Cordbandes 34, das von der Zuführeinrichtung kommend auf die Umlenkrolle 10 läuft. Ersichtlich umschlingt das Cordband 34 die Umlenkrolle um wenigstens 75°, im gezeigten Beispiel um ca. 90° oder etwas mehr. Von dort läuft das Cordband 34 auf die erste Messerwelle 16, die wie beschrieben ebenfalls trommel- oder walzenförmig ausgeführt ist. Auch dort ist eine Umschlingung um wenigstens 75°, auch hier im gezeigten Beispiel von ca. 90° oder etwas mehr gegeben. Im Spalt zwischen den beiden Walzen 16 und 26 wird sodann das Cordband 34 geschnitten, es entstehen zwei Cordbandabschnitte 35, 36, die über die jeweiligen Führungsrollen 23, 24 voneinander separiert und nach unten abgezogen werden.

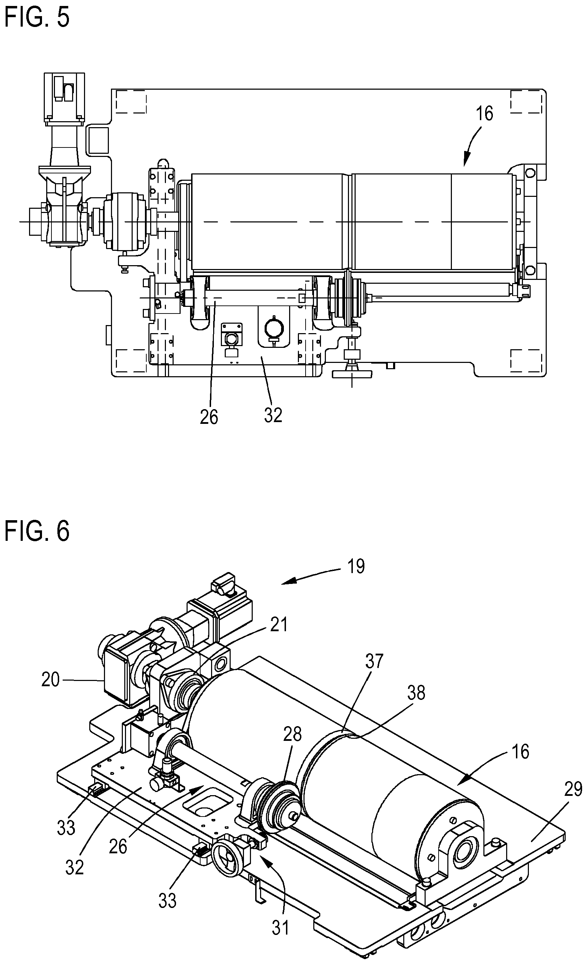

Der Durchmesser der Umlenkrolle 10 und der ersten Messerwelle 16 sollte im Bereich zwischen 200 - 400 mm liegen, bevorzugt liegt er zwischen 250 - 350 mm. Bevorzugt beträgt er ca. 300 mm. Es wird ein relativ großer Durchmesser bevorzugt, damit einerseits die Auflagefläche des Cordbandes an der Umlenkrolle 10 respektive der Messerwelle 16 relativ groß ist, und andererseits, dass das Cordband nicht um einen zu kleinen Radius umläuft respektive gebogen wird. Wie Fig. 4 und 6 zeigen, ist an der ersten Messerwelle 16 eine umlaufende Nut 37 vorgesehen, in die das Schneidmesser 28 der ersten Messerwelle 26, die sich, wie die Fig. 4 und 6 zeigen, nicht über die gesamte Länge der ersten Messerwelle 16 erstreckt, sondern lediglich etwa halb so lang ist, eingreift. Die Nut 37 wird durch ein entsprechendes Schneidmesser 38, das ringförmig ist und an der Messerwelle 16 vorgesehen ist, begrenzt, so dass das Schneidmesser 28 und das Schneidmesser 38 zum Schneiden des Cordbandes interagieren.

Der Aufbau der Messerwelle 16 ist dem Grunde nach in Fig. 8 gezeigt.

Gezeigt ist zum einen die Lagerachse 17, auf der zwei Haltescheiben 39, 40 positionsfest angeordnet sind. Auf diese ist eine erste Hülse 41 aufgeschoben. Die Haltschalen 39, 40 und die erste Hülse 41 sind miteinander vorzugsweise verschweißt, so dass sich eine Tragtrommel ergibt. Die Hülse 41 weist in einem ersten Abschnitt einen ersten Durchmesser D1 auf. Im Bereich der Hülsenmitte verjüngt sich der Durchmesser D1 unter Ausbildung einer Anschlagkante 42. An dieser liegt das Schneidmesser 38 an. Die Durchmesserverjüngung bildet die Nut 37. Der verringerte Durchmesser ist in Fig. 8 mit D2 gekennzeichnet.

Zum Gegenlagern des aufgeschobenen ringförmigen Schneidmessers 38 sind hier zwei weitere Hülsen 43, 44 vorgesehen, die axial hintereinander angeordnet sind und die beide ebenfalls den Durchmesser D1 aufweisen. Sie sind über einen Klemmdeckel 45, der an der Haltescheibe 40 festgeschraubt ist, axial fixiert, d. h., dass alle Hülsen axial miteinander verspannt sind.

Ersichtlich wird folglich eine rollen- oder walzenförmige Messerwelle 16 aufgebaut. Sie weist eine zylindrische Mantelfläche auf, gebildet aus den Mantelflächen der Hülsen 41, 43 und 44. Auf dieser zylindrischen Mantelfläche liegt das zu schneidende Cordband auf, wie Fig. 2 zeigt.

Für einen einfachen Messerwechsel, also zum Austausch des Messers 38, ist es lediglich erforderlich, das Lagerbauteil 18 zu demontieren. Die erste Messerwelle 16 kann sodann auf der Ablageleiste 27 abgelegt werden. Nun kann der Klemmdeckel 45 entfernt werden, so dass die Hülsen 44 und 43 abgezogen werden können. Anschließend kann das Messer 38 abgezogen und ein neues Messer aufgeschoben werden, wonach die Hülsen wieder aufgeschoben und der Klemmdeckel 45 wieder verschraubt wird. Nach erneuter Lagerung der Messerwelle 16 im Lagerbauteil 18 kann der Betrieb wieder aufgenommen werden. Der einfache Aufbau der Messerwelle 16 und deren Lagerung ermöglicht einen schnellen und einfachen Messerwechsel.

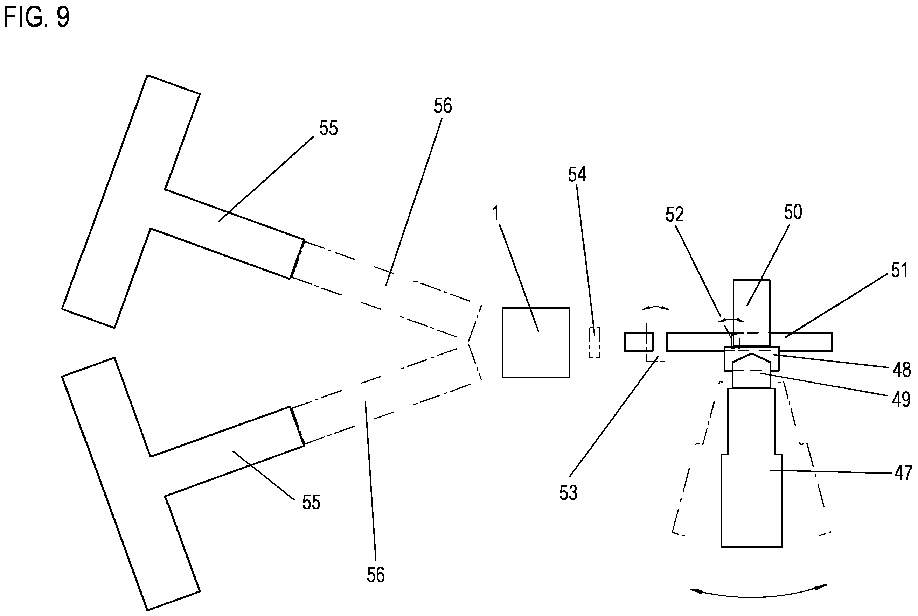

Fig. 9 zeigt ein beispielhaftes Layout für eine Karkassenanlage mit einem erfindungsgemäßen Slitter.

Vorgesehen ist eine Abwickelstation 47, aus der das zu bearbeitende Cordband bezogen wird. In der Abwickelstation werden in ein geeignetes Gestell die zu verarbeitenden Materialrollen eingehängt und ausgewickelt. Hierbei wird die zu verarbeitende gummierte Cordbahn von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann wie ausgeführt der Abwickler 47 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler transportiert wird. Diese Aufzählung ist nicht abschließend. Der Abwickler ist verschwenkbar.

Der Abwickelstation 47 folgt eine Schere 48, die zum Schneiden des von der Abwickelstation kommenden Cordbands dient. Die Schere 48 dient zum Abschneiden von Cordbandstreifen in einer definierten Breite und einem definierten Winkel. Als Schere werden verschiedene Typen verwendet:
- Guillotine Scheren mit feststehendem Untermesser und auf und abfahrbarbarem Obermesser,
- Rundmesserscheren mit einem feststehenden Untermesser und einen daran entlang fahrendem Rundmesser,
- Scheren mit einem schnell rotierenden Sägemesser (ähnlich einem Kreissägenmesser).

Je nach zu verarbeitenden Material der Kunden kommen verschiedene Scherenausführungen zum Einsatz. Hierbei ist entscheidend, welches Cordmaterial (ob Textil- oder Stahlcord) und in welchem Winkel dieses geschnitten werden muß (Anlagentypen Karkasse bzw. Gürtel), wobei in diesem Beispiel eine Schere für eine Karkassenanlage verwendet wird.

Der Scherentisch dient als Materialunterstützung 49 und ist mit der Abwickelstation 47 verbunden und schwenkt im Bedarfsfall gemeinsam mit dieser. Das zu verarbeitende Material liegt auf dem Scherentisch und wird auf diesem liegend in die Schere 48 gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schere 48 eingelegt werden muss, oder falls zum Schwenken des Abwicklers das Material ein Stück weit aus der Schere 48 zurückgezogen wurde.

Relevant für die Scherenbauform ist der Ablauf nach dem Schneiden. Um das geschnittene Material mit wenigen Bearbeitungsschritten in den Folgeprozess einzubinden sind weitere Maschinenkomponenten im Einsatz (Bänder, Hochhalter, Spleißer, etc.). Dafür ist es erforderlich so nah wie möglich mit diesen Komponenten an das Untermesser und in das Maschinengestell zu bauen. Das Material sollte hierzu so wenig wie möglich bewegt werden (u.a. Fallhöhe), um es in geschnittener Ablageposition weiter zu verarbeiten.

Um das Material durch die Schere zu fördern kommt in den meisten Fällen ein Rückzugsystem 50 zum Einsatz. Dabei muss mit einer Greifvorrichtung (Zange) sehr nahe an das Untermesser gefahren werden. Hierzu ist ein gewisser Platzbedarf erforderlich um Kollisionen mit dem Obermesser (bzw. Rundmesser) zu vermeiden. Dadurch ergeben sich unterschiedliche Bauformen der Scheren.

Das Rückzugsystem 50 dient zum Fördern der Materialbahn in die Schere 48 bzw. zieht das gegriffene Band durch die Schere 48, wie zuvor beschrieben. Die Schere 48 weist ferner ein Transportband auf, das den geschnittenen Cordbandstreifen aufnimmt und ihn aus der Schere 48 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandstreifen wird sodann auf die erste Fördereinrichtung in Form eines Bandes 51 einer Spleißvorrichtung, hier einem Überlappspleißer 52 gegeben, und der eigentlichen Spleißeinheit zugeführt. Diese erste Fördereinrichtung 51 kann grundsätzlich auch mit der Fördereinrichtung, die der Schere 48 zugeordnet ist, zusammenfallen. D. h., dass sich zwischen dem eigentlichen Überlappspleißer 52 und der Schere 48 nur eine, bezogen auf den Überlappspleißer dann erste Fördereinrichtung befindet. Der Überlappspleißer 52 dient zum Verbinden (rein mechanisch, ohne Zuhilfenahme von Zusatzstoffen) der zuvor geschnittenen Bandstreifen. Sie ist im Winkel verschwenkbar, um das Bandmaterial in verschiedenen Winkeln verarbeiten zu können.

Optional ist noch eine weitere Spleißvorrichtung Form eines Stumpfspleißers 53 gezeigt, der anstelle des Überlappspleißers 52 verwendet werden kann, wenn diese Spleißart erforderlich ist.

Dem Überlappspleißer 52 respektive seiner zweiten Fördereinrichtung (bzw. der alternativen Stumpfspleißvorrichtung 53) nachgeschaltet ist eine optional vorzusehende Beruhigungsrolle 54. Hierbei handelt es sich lediglich um eine angetriebene Rolle, die das Material, das von der Spleißvorrichtung 52/53 kommt, in die nächste Komponente transportiert. Hierbei erfährt das Material durch den Transport über die Rolle eine Gegenbiegung, durch die Gegenbiegung zieht sich das Material in Längsrichtung zusammen. Hintergrund ist somit die Dehnung des Materials in Längsrichtung bei der Verarbeitung in der erfindungsgemäßen Spleißvorrichtung 52/53 zu reduzieren. Diese Rolle ist jedoch nicht zwingend vorzusehen. Während des Abtransports wird in der Schere 48 bereits der nächste Bandstreifen geschnitten.

Vorgesehen ist sodann der erfindungsgemäße Slitter 1, in dem das Cordband in zwei Teilbänder geschnitten wird. Es handelt sich also um eine Längsteilvorrichtung, d. h., die in der Spleißvorrichtung 52/53 erzeugte lange Materialbahn wird in zwei Streifen getrennt. Dies dient der Erhöhung der Ausbringung einer Maschine, da bei einer solchen Ausgestaltung ein Scherenschnitt zu zwei fertigen Streifen in den beiden hier nachgeschalteten Aufwickelstationen 55 führt.

Den Aufwickelstationen 55 können optionale Belegevorrichtungen 56 vorgeschaltet sein. In diesen Stationen werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante (= Schnittkante) freiliegenden Cordfäden zu ummanteln.

In jedem Fall vorgesehen sind die Aufwickelstationen 55. In diesen Stationen werden die erfolgten Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

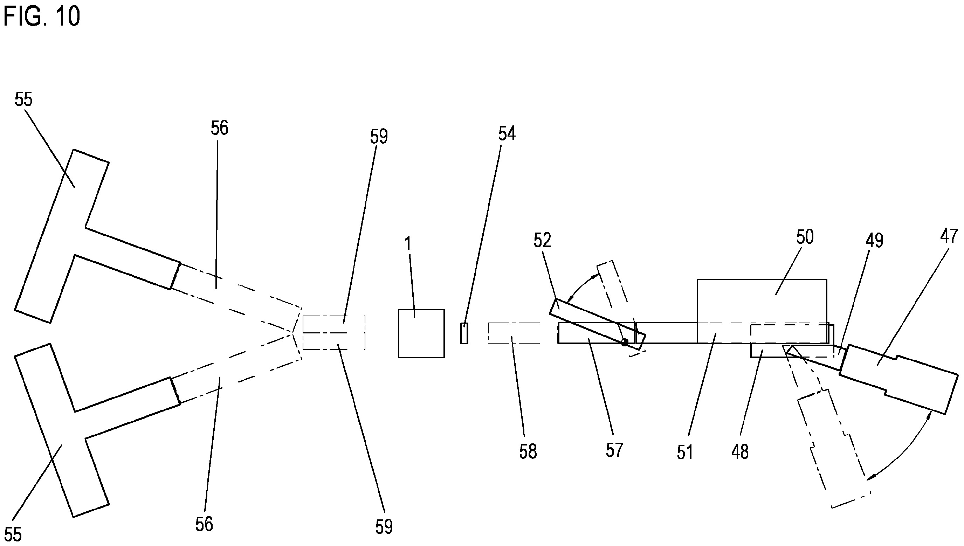

Die Fig. 10 zeigt ein beispielhaftes Layout einer Gürtelanlage mit Slitter. Komponenten, wie sie bereits in den Layouts der Fig. 9 beschrieben wurden, sind, sofern vorgesehen, mit gleichen Bezugszeichen versehen, ihre Funktion ist die gleiche wie zur Fig. 9 und 10 beschrieben.

Vorgesehen ist eine Abwickelstation 47, die hier jedoch um einen deutlich größeren Winkel verschwenkbar ist. Der Abwickler kann beliebigen Typs sein, wie bereits zuvor beschrieben.

Der Abwickelstation 47 folgt die Schere 48. Der Scherentisch dient als Materialunterstützung 49 und ist mit der Abwickelstation 47 verbunden und schwenkt im Bedarfsfall gemeinsam mit.

Die Schere 48 dient zum Abschneiden von Cordbandstreifen in einer definierten Breite und einem definierten Winkel. Als Schere 48 können die vorher beschriebenen Scherentypen, die für Gürtelanlagen geeignet sind, verwendet werden.

Der Schere 48 folgt ein Rückzugsystem 50, wie es zuvor beschrieben wurde. Es dient zum Fördern der Materialbahn in die Schere 48 bzw. zieht das gegriffene Band durch die Schere 48, wie zuvor beschrieben.

Der Cordbandstreifen wird sodann auf die erste Fördereinrichtung 51 einer Spleißvorrichtung 52, die als Überlapp- oder Stumpfspleißer ausgeführt sein kann, gegeben, und der eigentlichen Spleißvorrichtung zugeführt. Die Spleißvorrichtung ist um einen beachtlichen Winkel zur Einstellung des erforderlichen Spleißwinkels verschwenkbar. Sie weist ferner ein Abtransportband 57 auf, mit dem das gespleißte Band der nachgeschalteten Komponente zugeführt wird.

Optional kann der Spleißvorrichtung 52 noch ein Band 58 zum Handspleißen, also zur manuellen Verbindung der Bandabschnitte nachgeschaltet sein. Während dieser manuellen Bearbeitung ist die automatische Spleißvorrichtung 52 außer Betrieb. Ein solches Handspleißen ist bei bestimmten Cordbandmaterialien, sehr schmalen Abschnittsbreiten oder auf Kundenwunsch erforderlich.

Optional kann auch hier eine Beruhigungsrolle 54 vorgesehen werden. Weiterhin ist, ebenso optional, ein Reparaturband 59 vorgesehen. Sollten Fehler im Band erkannt werden, können sie hier repariert werden.

Gemäß Fig. 10 folgt sodann der erfindungsgemäße Slitter 1 und eine die beiden optionalen Belegevorrichtungen 56, wie bereits zuvor beschrieben.

In jedem Fall vorgesehen sind zwei Aufwickelstationen 55, die wie beschrieben unterschiedlich ausgeführt sein kann. In dieser Station werden die erfolgten Materialbahnen wieder mit einer Zwischenlage, die das Verkleben verhindert, auf Spulen gewickelt.

Wenngleich in sämtlichen Darstellungen das Band von rechts nach links gefördert wird ist es selbstverständlich möglich, das Layout auch in umgekehrter, spiegelbildlicher Ausführung auszulegen, also den Streifen von links nach rechts zu transportieren. Alle als optional beschriebenen Komponenten können in unterschiedlicher Kombination zusammen mit den wesentlichen Komponenten vorgesehen werden. Deshalb sind unterschiedliche Layouts aus allen beschriebenen Komponenten erstellbar.

## Patentansprüche

1. Slitter zum Schneiden eines Cordbandes, mit einem Rahmengestell, wenigstens einer Schneideinheit, sowie einer Zuführeinrichtung, über die das der Schneideinheit zuzuführende Cordband geführt wird, wobei die Schneideinheit eine über ein Antriebsmittel angetriebene erste und eine zweite Messerwelle, die parallel zueinander angeordnet sind und die zum Schneiden zusammenwirken umfasst, zwischen denen das zu schneidende Cordband durchläuft, wobei der ersten Messerwelle (16) eine Umlenkrolle (10) vorgeschaltet ist, die von dem von der Zuführeinrichtung (4) kommenden Cordband (34) abschnittsweise umschlungen ist, und über die das Cordband (34) derart zur ersten Messerwelle (16) hin umgelenkt wird, dass es die Messerwelle (16) vor dem Schnitt abschnittsweise umschlingt, wobei der Schneideinrichtung (3) zwei in einer Richtung senkrecht zur Materialtransportrichtung versetzt angeordnete Führungsrollen (23, 24) nachgeschaltet sind, über die jeweils ein geschnittener Cordbandstreifen (35, 36) läuft,
**dadurch gekennzeichnet, dass** die Führungsrollen (23, 24) über ein Antriebsmittel angetrieben sind.

2. Slitter nach Anspruch 1, **dadurch gekennzeichnet, dass** die Umlenkrolle (10) über ein Antriebsmittel (14, 15) angetrieben ist.

3. Slitter nach Anspruch 2, **dadurch gekennzeichnet, dass** erste Messerwelle (16) und die Umlenkrolle (10) über ein gemeinsames Antriebsmittel angetrieben sind.

4. Slitter nach einem der vorangehenden Ansprüche, **dadurch gekennzeichnet, dass** der Umschlingungswinkel des Cordbands (34) an der Umlenkrolle (10) wenigstens 75°, insbesondere wenigstens 90° beträgt.

5. Slitter nach einem der vorangehenden Ansprüche, **dadurch gekennzeichnet, dass** die Umlenkrolle (10) einen Durchmesser zwischen 200 - 400 mm, insbesondere von zwischen 250 - 350 mm, und vorzugsweise von 300 mm aufweist.

6. Slitter nach einem der vorangehenden Ansprüche, **dadurch gekennzeichnet, dass** der Umschlingungswinkel des Cordbands (34) an der ersten Messerwelle (16) wenigstens 75°, insbesondere wenigstens 90° beträgt.

7. Slitter nach einem der vorangehenden Ansprüche, **dadurch gekennzeichnet, dass** die erste Messerwelle (16) einen Durchmesser zwischen 200 - 400 mm, insbesondere von zwischen 250 - 350 mm, und vorzugsweise von 300 mm aufweist.

8. Slitter nach einem der vorangehenden Ansprüche, **dadurch gekennzeichnet, dass** die Umlenkrolle (10) linear oder schwenkbewegbar, insbesondere über ein Stellelement (13), angeordnet ist.

9. Slitter nach Anspruch 8, **dadurch gekennzeichnet, dass** die Umlenkrolle (10) an einem Träger (11) drehgelagert ist, der über Linearführungen (12) linear bewegbar am Rahmengestell (2) angeordnet ist.

10. Slitter nach einem der vorangehenden Ansprüche, **dadurch gekennzeichnet, dass** die Führungsrollen (23, 24) und die erste Messerwelle (16) über ein gemeinsames Antriebsmittel, insbesondere umfassend einen umlaufenden Riemen, angetrieben sind.

11. Slitter nach einem der vorangehenden Ansprüche, **dadurch gekennzeichnet, dass** die zweite Messerwelle (26) zur Einstellung des Abstands zur ersten Messerwelle (16) relativ zur ersten Messerwelle (16) bewegbar ist.

12. Slitter nach einem der vorangehenden Ansprüche, **dadurch gekennzeichnet, dass** die erste Messerwelle (16) eine Achse (17) umfasst, an der über Haltescheiben (39, 40) eine erste Hülse (41) angeordnet ist, die in einem ersten Abschnitt einen ersten Durchmesser (D1) aufweist, der unter Ausbildung einer Anschlagkante (42) auf einen kleineren zweiten Durchmesser (D2) abnimmt, wobei an der Anschlagkante (42) ein ringförmiges Slittermesser (38) anliegt, das über wenigstens eine auf die Hülse (41) aufgeschobene weitere Hülse (43, 44) fixiert ist, wobei der Durchmesser der weiteren Hülse (43, 44) dem ersten Durchmesser der ersten Hülse entspricht.

13. Slitter nach Anspruch 12, **dadurch gekennzeichnet, dass** die wenigstens eine weitere Hülse (43, 44) mittels einer an einer Haltescheibe (40) befestigten Klemmscheibe (45) gehaltert ist.

14. Slitter nach Anspruch 12 oder 13, **dadurch gekennzeichnet, dass** zwei einander axial nachgeschaltete weitere Hülsen (43, 44) mit gleichem Durchmesser vorgesehen sind.

## Claims

1. Slitter for cutting a cord tape, having a frame stand, at least one cutting unit, and a feed installation by way of which the cord tape to be fed to the cutting unit is guided, wherein the cutting unit comprises a first and a second knife shaft, driven by way of a drive means, which are disposed so as to be mutually parallel and interact for cutting, the cord tape to be cut running therebetween, wherein a deflection roller (10) which in portions is wrapped by the cord tape (34) that emanates from the feed installation (4) is disposed upstream of the first knife shaft (16), the cord tape (34) by way of said deflection roller (10) being deflected towards the first knife shaft (16) in such a manner that said cord tape (34), prior to the cut, in portions wraps the knife shaft (16), wherein two guide rollers (23, 24) which in a direction perpendicular to the material transport direction are disposed in an offset manner are disposed downstream of the cutting installation (3), in each case one cut cord tape strip (35, 36) running over said guide rollers (23, 24),
**characterized in that** the guide rollers (23, 24) are driven by way of a drive means.

2. Slitter according to Claim 1, **characterized in that** the deflection roller (10) is driven by way of a drive means (14, 15).

3. Slitter according to Claim 2, **characterized in that** the first knife shaft (16) and the deflection roller (10) are driven by way of a common drive means.

4. Slitter according to one of the preceding claims, **characterized in that** the wrap angle of the cord tape (34) on the deflection roller (10) is at least 75°, in particular at least 90°.

5. Slitter according to one of the preceding claims, **characterized in that** the deflection roller (10) has a diameter between 200 to 400 mm, in particular of between 250 to 350 mm, and preferably of 300 mm.

6. Slitter according to one of the preceding claims, **characterized in that** the wrap angle of the cord tape (34) on the first knife shaft (16) is at least 75°, in particular at least 90°.

7. Slitter according to one of the preceding claims, **characterized in that** the first knife shaft (16) has a diameter between 200 to 400 mm, in particular of between 250 to 350 mm, and preferably of 300 mm.

8. Slitter according to one of the preceding claims, **characterized in that** the deflection roller (10) is disposed so as to be movable in a linear or pivotable manner, in particular by way of an actuator element (13).

9. Slitter according to Claim 8, **characterized in that** the deflection roller (10) is rotatably mounted on a support (11) which by way of linear guides (12) is disposed so as to be movable in a linear manner on the frame stand (2).

10. Slitter according to one of the preceding claims, **characterized in that** the guide rollers (23, 24) and the first knife shaft (16) are driven by way of a common drive means, in particular comprising a revolving belt.

11. Slitter according to one of the preceding claims, **characterized in that** the second knife shaft (26) for setting the spacing from the first knife shaft (16) is movable relative to the first knife shaft (16) .

12. Slitter according to one of the preceding claims, **characterized in that** the first knife shaft (16) comprises an axle (17) on which a first sleeve (41) is disposed by way of holding discs (39, 40), said first sleeve (41) in a first portion having a first diameter (D1) which while configuring a detent edge (42) decreases to a smaller, second diameter (D2), wherein an annular slitter knife (38) bears on the detent edge (42), said annular slitter knife (38) being fixed by way of at least one further sleeve (43, 44) that is push-fitted onto the sleeve (41), wherein the diameter of the further sleeve (43, 44) corresponds to the first diameter of the first sleeve.

13. Slitter according to Claim 12, **characterized in that** the at least one further sleeve (43, 44) is mounted by means of a clamping disk (45) that is fastened to a holding disk (40).

14. Slitter according to Claim 12 or 13, **characterized in that** two further sleeves (43, 44) of identical diameter that are disposed so as to be axially sequential are provided.

## Revendications

1. Dispositif de coupe pour découper une bande de corde, comprenant un bâti de cadre, au moins une unité de coupe ainsi qu'un dispositif d'alimentation par le biais duquel est guidée la bande de corde à acheminer à l'unité de coupe, l'unité de coupe comprenant un premier et un deuxième arbre de coupe entraînés par le biais d'un moyen d'entraînement, lesquels sont disposés parallèlement l'un à l'autre et coopèrent pour effectuer la coupe, entre lesquels passe la bande de corde à découper, une poulie de renvoi (10) étant montée en amont du premier arbre de coupe (16), laquelle est en partie entourée par la bande de corde (34) provenant du dispositif d'alimentation (4) et par le biais de laquelle la bande de corde (34) est renvoyée au premier arbre de coupe (16) de telle sorte qu'elle entoure en partie l'arbre de coupe (16) avant la coupe, deux poulies de guidage (23, 24) disposées de manière décalée dans une direction perpendiculaire à la direction de transport de matériau étant montées en aval du dispositif de coupe (3), sur lesquelles passe à chaque fois un tronçon de bande de corde coupé (35, 36), **caractérisé en ce que** les poulies de guidage (23, 24) sont entraînées par le biais d'un moyen d'entraînement.

2. Dispositif de coupe selon la revendication 1, **caractérisé en ce que** la poulie de renvoi (10) est entraînée par le biais d'un moyen d'entraînement (14, 15).

3. Dispositif de coupe selon la revendication 2, **caractérisé en ce que** le premier arbre de coupe (16) et la poulie de renvoi (10) sont entraînés par un moyen d'entraînement commun.

4. Dispositif de coupe selon l'une quelconque des revendications précédentes, **caractérisé en ce que** l'angle d'enveloppement de la bande de corde (34) sur la poulie de renvoi (10) est d'au moins 75°, en particulier d'au moins 90°.

5. Dispositif de coupe selon l'une quelconque des revendications précédentes, **caractérisé en ce que** la poulie de renvoi (10) présente un diamètre compris entre 200 et 400 mm, en particulier entre 250 et 350 mm, de préférence de 300 mm.

6. Dispositif de coupe selon l'une quelconque des revendications précédentes, **caractérisé en ce que** l'angle d'enveloppement de la bande de corde (34) au niveau du premier arbre de coupe (16) est d'au moins 75°, en particulier d'au moins 90°.

7. Dispositif de coupe selon l'une quelconque des revendications précédentes, **caractérisé en ce que** le premier arbre de coupe (16) présente un diamètre compris entre 200 et 400 mm, en particulier entre 250 et 350 mm, de préférence de 300 mm.

8. Dispositif de coupe selon l'une quelconque des revendications précédentes, **caractérisé en ce que** la poulie de renvoi (10) est disposée de manière déplaçable linéairement ou par pivotement, en particulier par le biais d'un élément de commande (13) .

9. Dispositif de coupe selon la revendication 8, **caractérisé en ce que** la poulie de renvoi (10) est supportée à rotation sur un support (11) qui est disposé sur le bâti de cadre (2) de manière déplaçable linéairement par le biais de guides linéaires (12).

10. Dispositif de coupe selon l'une quelconque des revendications précédentes, **caractérisé en ce que** les poulies de guidage (23, 24) et le premier arbre de coupe (16) sont entraînés par le biais d'un moyen d'entraînement commun, en particulier comprenant une courroie entraînée en circulation.

11. Dispositif de coupe selon l'une quelconque des revendications précédentes, **caractérisé en ce que** le deuxième arbre de coupe (26) peut être déplacé par rapport au premier arbre de coupe (16) pour ajuster la distance par rapport au premier arbre de coupe (16).

12. Dispositif de coupe selon l'une quelconque des revendications précédentes, **caractérisé en ce que** le premier arbre de coupe (16) comprend un axe (17) au niveau duquel est disposée une première douille (41) par le biais de disques de retenue (39, 40), laquelle présente, dans une première portion, un premier diamètre (D1) qui diminue en formant une arête de butée (42) jusqu'à un deuxième diamètre plus petit (D2), un couteau de coupe de forme annulaire (38) s'appliquant contre l'arête de butée (42), lequel est fixé par le biais d'au moins une douille supplémentaire (43, 44) poussée sur la douille (41), le diamètre de la douille supplémentaire (43, 44) correspondant au premier diamètre de la première douille.

13. Dispositif de coupe selon la revendication 12, **caractérisé en ce que** l'au moins une douille supplémentaire (43, 44) est retenue au moyen d'un disque de serrage (45) fixé à un disque de retenue (40) .

14. Dispositif de coupe selon la revendication 12 ou 13, **caractérisé en ce que** deux douilles supplémentaires (43, 44) de diamètre identique montées axialement l'une derrière l'autre sont prévues.
